# EUROPÄISCHE PATENTSCHRIFT

(11) **EP 1 799 756 B1**
(45) Veröffentlichungstag und Bekanntmachung des Hinweises auf die Patenterteilung: **05.03.2008**
(21) Anmeldenummer: 05790672.9
(22) Anmeldetag: 06.10.2005
(51) Int. Cl.: C08K 3/18, C08K 3/00

(54) **STABILISIERUNG VON WÄSSRIGEN LÖSUNGEN VON HOMO- UND COPOLYMEREN DES N-VINYLPYRROLIDONS**
STABILISATION OF AQUEOUS SOLUTIONS OF HOMOPOLYMERS AND COPOLYMERS OF N-VINYLPYRROLIDONES
STABILISATION DE SOLUTIONS AQUEUSES D'HOMOPOLYMERES ET DE COPOLYMERES DE N-VINYLPYRROLIDONES

(30) Priorität: 08.10.2004 DE 102004049344
(43) Veröffentlichungstag der Anmeldung: 27.06.2007
(73) Patentinhaber: BASF SE, 67056 Ludwigshafen (DE)
(72) Erfinder: BOHRER, Erik, 67133 Maxdorf (DE); FAUL, Dieter, 67150 Niederkirchen (DE); GARCIA CASTRO, Ivette, 67067 Ludwigshafen (DE); GEBHARDT, Norbert, 67434 Neustadt (DE); HÖSSEL, Peter, 67105 Schifferstadt (DE); MENDERA, Peter, 67125 Dannstadt-Schauernheim (DE); PINNEKER, Olga, 67258 Hessheim (DE); POTZOLLI, Bernd, 67098 Bad Dürkheim (DE); STEIN, Stefan, 55286 Wörrstadt (DE); STRUBE, Karl-Hermann, 67346 Speyer (DE); WIDMAIER, Ralf, 68167 Mannheim (DE); NEUTZNER, Josef, 67434 Neustadt (DE); LEHNERT, Simone, 67346 Speyer (DE)
(86) Internationale Anmeldenummer: PCT/EP2005/010763
(87) Internationale Veröffentlichungsnummer: WO 2006/040067

(56) Entgegenhaltungen:
- US-A- 2 821 519
- US-A- 3 480 557
- US-A- 4 786 699
- US-A- 5 130 124

## Beschreibung

Die vorliegende Erfindung betrifft eine verbesserte physikalische Stabilisierung von wässrigen Lösungen von Homo- und Copolymeren des N-Vinylpyrrolidons mit Wasserstoffperoxid sowie ein Verfahren zur Herstellung solcher Lösungen.

Homo- und Copolymere des N-Vinylpyrrolidons werden für eine Vielzahl von Anwendungen in Form ihrer wässrigen Lösungen eingesetzt. Solche Lösungen werden im Allgemeinen vom Anwender für eine gewisse Zeit gelagert. Dies erfordert eine Stabilisierung hinsichtlich der physikalischen Eigenschaften der Lösungen, also hinsichtlich Geruch, Farbe, Trübung. Wichtig für die anwendungstechnischen Eigenschaften solcher Lösungen ist auch die Stabilisierung hinsichtlich der Viskosität. Einwichtiger Aspekt der Stabilisierung ist dabei auch die Stabilisierung gegen kurzzeitige Temperaturbelastungen. Temperaturbelastungen können beispielsweise zu einer Beeinträchtigung der Farbe führen, was sich an einem Ansteigen der Jodfarbzahl zeigt. Weiterhin soll auch nach Weiterarbeitung der Polymerlösungen zu wässrigen Systemen wie z.B. Gelen die physikalische Stabilität der Polymeren gewährleistet sein, ohne dass es zu einer negativen Beeinträchtigung der Eigenschaften der Folgeprodukte kommt.. Gleichzeitig müssen solche Lösungen aber auch gegen Bakterienbefall geschützt sein.

Die Verwendung von Wasserstoffperoxid mit N-Vinylpyrrolidon-Homo- oder Copolymeren in wässrigen Lösungen zur Herstellung von Komplexen für Desinfektionsmittel ist an sich bekannt. Dazu werden zunächst Lösungen der Polymere mit H2O2 hergestellt, die anschließend in die pulverförmigen Komplexe überführt werden. Solche Produkte enthalten komplex gebundenes Wasserstoffperoxid im Prozentbereich. Solche Komplexe sind beispielsweise in der DE-A 43 44 131 beschrieben.

Allerdings stand zu befürchten, dass die Verwendung von Wasserstoffperoxid in Lösungen entsprechender Polymere zur Vernetzung dieser Polymere führen könnte, da Wasserstoffperoxid auch zur Herstellung von vernetztem PVP eingesetzt wird. So ist zum Beispiel aus der WO 98/58990 bekannt, dass Polyvinylpyrrolidon mit Wasserstoffperoxid vernetzt werden kann.

Weiterhin ist bekannt, dass wässrige Lösungen solcher Polymeren mit Alkylparabenen stabilisiert werden können. Solche Parabene sind zwar für Anwendungen wie z.B. die Kosmetik zugelassen, bieten aber auch anwendungstechnische Nachteile. Vor allem mit niedrigmolekularen VP-Polymeren ist die Kompatibilität gering. Außerdem wurden Vertrübungen beobachtet, sodass derart stabilisierte Produkte für Anwendungen wie z.B. Haargele nicht geeignet erscheinen. Hinzu kommt, dass solche Mittel zur wirksamen Stabilisierung oft in Mengen im Prozentbereich eingesetzt werden müssen und zudem im Endprodukt in unveränderten Mengen enthalten sind. Auch allergische Reaktionen auf solche Mittel sind nicht auszuschließen.

Aufgabe der vorliegenden Erfindung war es, eine verbesserte Methode zur Stabilisierung der Polymerlösungen zu finden.

Demgemäss wurden wässrige Polymerlösungen von Homo- und Copolymeren des N-Vinylpyrrolidons gefunden, die zur Stabilisierung auf einen Gehalt an Wasserstoffperoxid von 100 bis 5000 ppm eingestellt werden.

Weiterhin wurde ein Verfahren zur Herstellung solcher stabilisierten Lösungen gefunden, welches dadurch gekennzeichnet ist, dass die wässrigen Polymerlösungen mit wässrigem Wasserstoffperoxid auf einen Gehalt von 100 bis 5000 ppm Wasserstoffperoxid eingestellt werden.

Vorzugsweise wird den Polymerlösungen soviel Wasserstoffperoxid zugesetzt, dass 100 bis 2500 ppm enthalten sind. Diese Angaben beziehen sich auf den Anfangsgehalt, das heißt den nach zwei Tagen nach Zugabe messbaren Gehalt. Je nach Temperaturbelastung oder anderen Einflüssen kann sich der messbare Gehalt bei längerer Lagerung verringern. Die stabilisierende Wirkung bleibt jedoch über einen längeren Zeitraum erhalten.

Die Menge an verwendetem Wasserstoffperoxid kann sich nach der Art des Polymers in der Lösung richten. Bei Polymeren, die beispielsweise quaterniertes N-Vinylimidazol als Comonomer enthalten, reichen schon kleinere Mengen im Bereich von 100 bis 500 ppm, vorzugsweise bis 300 ppm, ganz besonders bevorzugt bis 200 ppm, zur Stabilisierung. Bei Polyvinylpyrrolidon empfiehlt es sich jedoch, Mengen größer 500 ppm, insbesondere größer 700, besonders bevorzugt 1000 bis 2500 ppm, zuzugeben.

Als Homo- und Copolymere des N-Vinylpyrrolidons kommen neben unvernetztem Polyvinylpyrrolidon grundsätzlich alle Copolymere von N-Vinylpyrrolidon mit den folgenden radikalisch copolymerisierbaren Monomeren in Betracht:

Geeignete Monomere sind beispielweise Acrylsäure und substituierte Acrylsäuren sowie Salze, Ester und Amide davon, wobei die Substituenten an den Kohlenstoffatomen in der zwei oder drei Position der Acrylsäure stehen, und unabhängig voneinander ausgewählt sind aus der Gruppe bestehend aus C₁- C₂₀ Alkyl, -CN, COOH besonders bevorzugt Methacrylsäure, Ethacrylsäure, Acrylamid, Methacrylamid, N,N-Dimethylacrylamid und N,N-Dimethylmethacrylamid.

Weitere geeignete Monomere sind Amide von Acrylsäure und deren Derivaten wie Ethacrylamid, N-Methylacrylamid, N-Ethylacrylamid, N-Isopropylacrylamid, N-Butylacrylamid, N-t-Butylacrylamid, N-Octylacrylamid, N-t-Octylacrylamid, N-Octadecylacrylamid, N-Phenylacrylamid, N-Methylmethacrylamid, N-Ethylmethacrylamid, N-Isopropylmethacrylamid, N-Dodecylmethacrylamid, N-[3-(dimethylamino)propyl]methacrylamid, N-[3-(dimethylamino)propyl]acrylamid, N-[3-(dimethylamino)-butyl]methacrylamid, N-[8-(dimethylamino)octyl]methacrylamid, N-[12-(dimethylamino)dodecyl]methacrylamid, N-[3-(diethylamino)-propyl]methacrylamid, N-[3-(diethylamino)propyl]acrylamid, ungesättigte Sulfonsäuren wie zum Beispiel Acrylamidopropansulfonsäure; 3-Cyanoacrylsäure.

Ester von Acrylsäure und deren Derivaten wie Methylacrylat, Ethylacrylat, Propylacrylat, n-Butylacrylat, iso-Butylacrylat, t-Butylacrylat, 2-Ethylhexylacrylat, Decylacrylat, Methylmethacrylat, Ethylmethacrylat, Propylmethacrylat, n-Butylmethacrylat, isoButylmethacrylat, t-Butylmethacrylat, 2-Ethylhexylmethacrylat, Decylmethacrylat, Stearyl(meth)acrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)acrylate, N,N-Dimethylaminomethyl(meth)acrylat, N,N-Diethylaminomethyl(meth)acrylat, N,N-Dimethylaminoethyl(meth)acrylat, N,N-Diethylaminoethyl(meth)acrylat, N,N-Dimethylaminobutyl(meth)- acrylat, N,N-Diethylaminobutyl(meth)acrylat, N,N-Dimethylaminohexyl(meth)-acrylat, N,N-Dimethylaminooctyl(meth)acrylat, N,N-Dimethylaminododecyl(meth)acrylat,

Andere geeignete Monomere sind Vinyl- und Allylester von C₁-C₄₀ linearen, C₃-C₄₀ verzweigtkettigen oder C₃-C₄₀ carbocyclische Carbonsäuren wie Vinylacetat, Vinylpropionat sowie deren Hydrolyseprodukte wie Vinylalkohol, Vinyl- oder Allylhalogenide, bevorzugt Vinylchlorid und Allylchlorid, Vinylether, bevorzugt Methyl-, Ethyl-, Butyl- oder Dodecylvinylether, Vinylformamid, N-Vinyl-N-Methylacetamid, Vinylamin; Methylvinylketon; Vinyllactame, bevorzugt Vinylpyrrolidon,Vinylcaprolactam und Vinylpiperidon, Vinyl- oder Allyl-substituierte heterocyclische Verbindungen, bevorzugt Vinylpyridin, Vinyloxazolin und Allylpyridin sowie Vinylfuran und Allylalkohol.

Weiterhin sind N-Vinylimidazole geeignet, worin R⁹ bis R¹¹ unabhängig voneinander für Wasserstoff, C₁-C₄-Alkyl oder Phenyl steht:

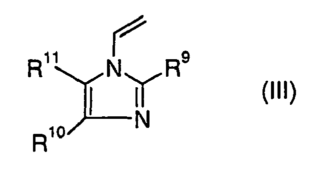

Beispiele sind 1-Vinylimidazol, 1-Vinyl-2-methylvinylimidazol, 3-Methyl-1-vinylimidazoliumchlorid und 3-Methyl-1-vinylimidazoliummethylsulfat.

Weitere geeignete Monomere sind Diallylamine der allgemeinen Formel 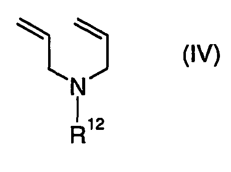 mit
- R¹² =: C₁- bis C₂₄-Alkyl, beispielsweise Diallyldimethylammoniumchlorid.

Weitere geeignete Monomere sind Maleinsäure, Fumarsäure, Maleinsäureanhydrid und seine Halbester und Halb-Amide und Imide, Maleimid, Crotonsäure, Itaconsäure, Vinylether (zum Beispiel: Methyl-, Ethyl-, Butyl- oder Dodecylvinylether), Vinylidenchlorid,und Kohlenwasserstoffe mit mindestens einer Kohlenstoff-Kohlenstoff Doppelbindung, bevorzugt Styrol, alpha-Methylstyrol, tert.-Butylstyrol, Styrolsulfonsäure und dessen Salze, Butadien, Isopren, Cyclohexadien, Ethylen, Propylen, 1-Buten, 2-Buten, Isobutylen, Vinyltoluol.

Von diesen sind besonders bevorzugt Acrylsäure, Methacrylsäure, Maleinsäure, Fumarsäure, Crotonsäure, Maleinsäureanhydrid sowie dessen Halbester sowie Halbamide und Imide, Methylacrylat, Methylmethacrylat, Ethylacrylat, Ethylmethacrylat, n-Butylacrylat, n-Butylmethacrylat, t-Butylacrylat, t-Butylmethacrylat, Isobutylacrylat, Isobutylmethacrylat, 2-Ethylhexylacrylat, Stearylacrylat, Stearylmethacrylat, N-t-Butylacrylamid, N-Octylacrylamid, N-t-Octylacrylamid, 2-Hydroxyethylacrylat, 2-Hydroxypropylacrylat, 2-2-Hydroxyethylmethacrylat, 3-Hydroxypropylmethacrylat, 3-Hydroxypropylacrylat, Alkylenglykol(meth)acrylat, Styrol, ungesättigte Sulfonsäuren und deren Salze wie zum Beispiel Acrylamidopropansulfonsäure und Styrolsulfonsäure, Vinylpyrrolidon, Vinylcaprolactam, Vinylether (z.B.: Methyl-, Ethyl-, Butyl- oder Dodecylvinylether), Vinylformamid, N-Vinyl-N-Methylacetamid, Vinylamin, 1-Vinylimidazol, 1-Vinyl-2-methylimidazol, N,N-Dimethylaminomethylmethacrylat und N-[3-(dimethylamino)-propyl]methacrylamid; 3-Methyl-1-vinylimidazoliumchlorid, 3-Methyl-1-vinylimidazoliummethylsulfat, N,N-Dimethylaminoethylmethacrylat, N-Isopropylmethacrylamid, N-[3-(dimethylamino)- propyl]methacrylamid quaternisiert mit Methylchlorid, VCAp, VI, 1-Vinyl-3-methylimidazolium -Salze wie Chlorid und Methylsulfat (QVI), VAC, (Meth)acrylamid, Dimethylaminoethyl(meth)acrylat und Dimethylaminoethyl(meth)acrylamid und deren quaternierten Analoga, Diallyldimethylammoniumchlorid, Vinylalkohol (durch Hydrolyse aus Vinylactetat nach Polymerisation), VFA, Vinylamin (durch Hydrolyse aus VFA nach Polymerisation), Dimethylaminopropyl(meth)acrylat, Dimethylaminopropyl(meth)acrylamid, (Meth)acrylsäure, Vinylpiperidon, N,N-Dimethyl(meth)acrylamid, Tert-Butyl(meth)acrylamid, N-tert-Octyl(meth)acrylamid, Stearyl(meth)acrylamid, Methyl-, Ethyl-, Butyl-, tert-Butyl-(meth)acrylat, 2,3-Dihydroxypropyl(meth)acrylat, N-Isopropylacrylamid, Vinylpropionat, 1-Vinyl-2-Methylimidazol, Vinylpyridin, Ester der (Meth)acrylsäure bzw. Ether von Allylalkohol und von Polyethylenoxid bzw. Propylenoxid bzw. Poly(ethylenoxid-co-propylenoxid) mit insgesamt 2 bis 200 EO- bzw. PO-Einheiten bzw. EO-/PO-Einheiten mit Methoxygruppe oder HydroxyGruppe am Kettenende, Methylvinylether, Hydroxyethyl(meth)acrylat, Hydroxypropyl(meth)acrylat, Vinyllactame, Vinyloxazoline wie Vinyloxazolin, Vinylmethyloxazolin, Vinylethyloxazolin, Acrylamidopropansulfonsäure, Allylalkohol.

Weitere geeignete Monomere sind mehrfunktionelle Monomere wie Triallylamin, Trivinylether, Divinylethylenharnstoff, 3-Vinyl-N-vinylpyrrolidon, 4-Vinyl-N-vinylpyrrolidon, 5-Vinyl-N-vinylpyrrolidon, Pentaeritroltriallylether, Methylenbisacrylamid, Butandioldiacrylat, Hexandioldiacrylat, Dipropylenglycoldiacrylat, Allylmethacrylat, Divinylbenzol, Ethylenglycoldimethacrylat, Triethylenglycoldimethacrylat und Triethylenglycoldivinylether.

Solche Monomere werden üblicherweise in kleinen Mengen von 0,01 bis 10 Gew.-% eingesetzt und führen zur Vernetzung der Polymere.

Ganz besonders bevorzugt als Comonomere sind N-Vinylcaprolactam (VCAp), N-vinylimidazol (VI), 1-Vinyl-3-methylimidazolium -Salze(QVI) beispielsweise Salze die durch Quaternierung mit Methylchlorid oder Dimethylsulfat erhalten werden, Vinylacetat, (Meth)acrylamid, Dimethylaminoethyl(meth)acrylat und Dimethylaminoethyl-(meth)acrylamid und deren quaternierten Analoga, Diallyldimethylammoniumchlorid.

Es können auch Coplymere, die neben VP Mischungen der genannten Comonomere enthalten, verwendet werden, beispielsweise Ter- oder Tetracopolymere . So können beispielsweise Terpolymere aus VP/VI/Methacrylamid oder VP/VCap/VI-Terpolymere behandelt werden.

Ganz besonders bevorzugte Copolymere sind demnach Copolymere aus N-Vinylpyrrolidon (VP) mit Vinylacetat mit einem Gewichtsverhältnis VP/VAc von 20:80 bis 80:20, beispielsweise 30:70, 50:50, 60:40, 70:30, mit K-Werten nach Fikentschervon 20 bis 100, weiterhin Copolymere aus VP und VI, beispielsweise mit einem Gewichtverhältnis VP/VI. von 1:1; Copolymere aus VP und VCap , beispielsweise mit einem Gewichtsverhältnis von 1:1, mit K-Werten nach Fikentscher von 20-100.

Weiterhin sind Copolymere aus VP und 1-Vinyl-3-methylimidazoliumchlorid (erhalten durch Quaternierung von 1-Vinylimidazol mit Methylchlorid) mit einem Gewichtsverhältnis von VP/QVI von 5:95 bis 95:5 bevorzugt, wobei die Copolymere K-Werte von 10 bis 100 aufweisen können.

Insbesondere werden erfindungsgemäß auch wässrige Lösungen von VP-Homopolymeren mit K-Werten nach Fikentscher von 10 bis 130, beispielsweise K12, K15, K17, K 25, K30, K60, K 80, K85, K90, K115, K 120 stabilisiert.

Die Polymerlösungen weisen üblicherweise einen Feststoffgehalt von 5 bis 80 Gew.-%, bevorzugt 10 bis 60 Gew.-% auf. Man kann Lösungen wie sie direkt aus der Herstellung der Polymeren erhalten werden verwenden oder aber auch pulverförmige Polymere in Wasser auflösen.

Wasserstoffperoxid wird in Form wässriger Lösungen mit einem Gehalt von 5 bis 70 Gew.-% H2O2,' bevorzugt 10 bis 50 Gew.-% eingesetzt.

Zur Herstellung der erfindungsgemäß stabilisierten Lösungen werden die wässrigen Polymerlösungen mit wässrigem Wasserstoffperoxid versetzt und auf den gewünschten Gehalt eingestellt.

Die Zugabe kann bei Temperaturen von 10 bis 95°C, bevorzugt 20 bis 85°C erfolgen.

Gemäß einer bevorzugten Ausführungsform der Erfindung erfolgt die Zugabe des wässrigen Wasserstoffperoxids zu den Polymerlösungen nach Abschluss der Polymerisation bei erhöhten Temperaturen zu der noch heißen Polymerlösung , insbesondere bei 70 bis 100°C , besonders bevorzugt 75 bis 95°C, unter Rühren, und abschließendes Abkühlen. Diese Ausführungsform ist vor allem bei Lösungen des Polyvinylpyrrolidons bevorzugt.

Zur Stabilisierung von Copolymeren enthaltend QVI als Comonomer empfiehlt es sich, Wasserstoffperoxid bei Temperaturen von 20 bis 50°C zuzugeben.

Da es bei einer Zugabe bei erhöhten Temperaturen zu einem Abbau des zugegebenen Wasserstoffperoxids kommen kann, empfiehlt es sich, mit einigen einfachen Handversuchen den Abbau bei der gewünschten Lagertemperatur zu ermitteln und die Menge an Wasserstoffperoxid so zu wählen, dass nach Abkühlen der Polymerlösungen und Lagerung von zwei Tagen der gewünschte Gehalt an Wasserstoffperoxid in der Polymerlösung vorliegt. Der Gehalt an Wasserstoffperoxid kann beispielsweise iodometrisch durch Reduktion der Peroxide mit Kaliumiodid und anschließender potentiometrischer Titration mit Thiosulfat-Lösung ermittelt werden. Eine weitere Methode zur Ermittlung des Peroxidsgehalts ist die potentiometrische Titration mit Cer-VI-sulfat-Lösung.

Die Zugabe des wässrigen Wasserstoffperoxids kann unter Normalatmosphäre erfolgen. Vorzugsweise erfolgt die Zugabe aber unter sauerstoffreduzierten Bedingungen, bevorzugt < 10 Vol.-%, besonders bevorzugt bei < 5 Vol.-% Sauerstoff. Als Schutzgas wird vorzugsweise Stickstoff eingesetzt.

Die entsprechenden Polymerlösungen können für eine Vielzahl von Anwendungen eingesetzt werden.

Beispielsweise eignen sie sich zur Anwendung in kosmetischen Mitteln zur Reinigung der Haut verwendet. Solche kosmetischen Reinigungsmittel sind ausgewählt aus Stückseifen, wie Toilettenseifen, Kernseifen, Transparentseifen, Luxusseifen, Deoseifen, Cremeseifen, Babyseifen, Hautschutzseifen, Abrasiveseifen und Syndets, flüssigen Seifen, wie pastöse Seifen, Schmierseifen und Waschpasten, und flüssigen Wasch-, Dusch- und Badepräparaten, wie Waschlotionen, Duschbädern und -gelen, Schaumbädern, Ölbädern und Scrub-Präparaten.

Bevorzugt werden die erfindungsgemäßen Lösungen in kosmetischen Mitteln zur Pflege und zum Schutz der Haut, in Nagelpflegemitteln sowie in Zubereitungen für die dekorative Kosmetik angewendet.

Besonders bevorzugt ist die Verwendung in Hautpflegemitteln, Intimpflegemitteln, Fußpflegemitteln, Deodorantien, Lichtschutzmitteln, Repellents, Rasiermitteln, Haarentfernungsmitteln, Antiaknemitteln, Make-up, Maskara, Lippenstifte, Lidschatten, Kajalstiften, Eyelinern, Rouges, Pudern und Augenbrauenstiften.

Die Hautpflegemittel liegen insbesondere als W/O- oder O/W-Hautcremes, Tag- und Nachtcremes, Augencremes, Gesichtscremes, Antifaltencremes, Feuchthaltecremes, Bleichcremes, Vitamincremes, Hautlotionen, Pflegelotionen und Feuchthaltelotionen vor.

Je nach Anwendungsgebiet können die erfindungsgemäßen Mittel in einer zur Hautpflege geeigneten Form, wie z.B. als Creme, Schaum, Gel, Stift, Pulver, Mousse, Milch oder Lotion appliziert werden.

Haarkosmetische Zubereitungen umfassen insbesondere Stylingmittel und/oder Konditioniermittel in haarkosmetischen Zubereitungen wie Haarkuren, Haarschäume (engl. Mousses), (Haar)gelen oder Haarsprays, Haarlotionen, Haarspülungen, Haarshampoos, Haaremulsionen, Spitzenfluids, Egalisierungsmittel für Dauerwellen, Haarfärbe- und -bleichmittel, "Hot-Oil-Treatment"-Präparate, Conditioner, Festigerlotionen oder Haarsprays. Je nach Anwendungsgebiet können die haarkosmetischen Zubereitungen als (Aerosol-)Spray, (Aerosol-)Schaum, Gel, Gelspray, Creme, Lotion oder Wachs appliziert werden.

Ein weiteres Anwendungsgebiet ist die Mundpflege, also Zahnpasta, Mundwässer, Haftcremes und dergleichen.

Ebenso können die stabilisierten Lösungen auch für pharmazeutische Anwendungen eingesetzt werden. Sie wirken zum einen als Verdicker, zum anderen aber auch als Filmbildner. Spezielle Anwendungen umfassen neben der Anwendung als Katheter-Coatings den Einsatz als Feuchtbindemittel, Matrixretardierungsmittel oder Coatingretardierungsmittel, z.B. für Slow-Release-Darreichungsformen, Gelbildner, Instant-Release-Coatings und Dragierhilfsmittel.

Weiterhin eignen sich die stabilisierten Polymerlösungen auch für die folgenden Anwendungen:

Abzieh- und Egalisierhilfsmittel für Textileinfärbung, Anreicherung/Trennung von (Edel) Metallen und polyvalenter Kationen, Aufhellmittel (Textildruck), Aufzeichnungsmedien, Betonzusatzmittel, Bindemittel für den Transferdruck, Charge-Transfer-Kathoden, Coating von Polyolefinen, Coatings, Desinfektions- und Konservierungsmittel, Diazotypien, Dispergierhilfsmittel, Druckfarben, Elektrisch leitende Schichten, Elektrodengele und Hautklebegele, Erdölgewinnung aus ölhaltigem Wasser, Erhöhung der Benetzbarkeit von Oberflächen, Färben von Polyolefinen, Diffusions-Transfer-Materialien, Farbübertragungsinhibitoren, Festbatterien (z.B. Lithiumbatterien), Festelektrolyte, Fischfuttergranulat, Fixateur für Parfümöle, Flexodruckplatten, Flockungsmittel, Hilfsmittel in der Photoindustrie (Fotografische Prozesse, Fotopapiere), Edelmetall-Kristallisationskeime für Silberfällung, Gasanalytik, Gipsbinden, Glas und -Fasern (Binder, Coating, Schmiermittel), Haftvermittler für Farbstoffe, Hilfsmittel bei der Erdöl- und Erdgasförderung sowie dem Erdöl- und Erdgastransport, Inhibierung von Chlatraten, Hydrophilisierung von Oberflächen, Inkjet-, Drucktinten und Kugelschreiberpasten, lonenaustauscher, Isomerisierungsinhibitor, Katalysatoren, Kathedercoating, Kesselsteinverhinderer oder Kesselsteinentferner, Keramik (Bindemittel, Verdicker, Lösungsvermittler, Dispergator), Klebstoff für Nährböden, Klebrohstoffe, Klebstoffe und Klebestifte, Komplexe mit organischen Verbindungen wie Albumin, Antioxidantien, Polyphenolen, Phenolen, Tanninen, Enzymen, Proteinen und Polymeren, Entfernung von Tannin/ Phenolen und Polyphenolen aus Flüssigkeiten, Komplexe mit anorganischen Verbindungen wie Halogene, Metalle, Metallsalze und Peroxide wie organische Peroxide und Wasserstoffperoxid, Konservierungsmittel, Kontaktlinsen, Korrosionsschutz, Kunststoffadditive, Lackhilfsstoffe, Lichtempfindliche Materialien, Lithographie, Löslichkeitsvermittler (Solubilisierung), Luftfilter, Membranherstellung, Metallguss und Metallhärtung, Metallkolloide und deren Stabilisierung, Metallkomplexe für reversible Sauerstoffabsorbtion, Metallquenchbäder, Mikroverkapselung, Öl- und Farbstoffentfernung aus Wasser, Ölrückgewinnung, Papierhilfsmittel (Spezialpapiere, Fotopapiere), Papierstreichfarben, Phasen-Transfer-Katalysatoren, Photoimaging, Pigmentdispersionen, Protonenleiter (wasserfrei), Reinigungsmittel von Abwässern, Rostverhinderer oder Rostentferner von metallischen Oberflächen, Saatgutbeize und Saatgutcoating, Schmiermitteladditive, Schutzkolloid, Silberhalogenid-Emulsionen, Slow-Release-Düngemittelformulierungen, Solubilisator zur Erhöhung der Adsorbierbarkeit/ Hydrophobie, Solubilisierung hydrophober Substanzen, Soil Release, Synthetische Fasern, tertiäre Erdölgewinnung, Textilhilfsmittel, Tintenstrahl-Aufzeichnungsmedien (Inkjetpapiere und -Folien), Trennung von Kohlenwasserstoffgemischen, Verbessertes Anfärben von Fasern, Wärmebeständige Schichten, wärmeempfindliche Schichten, wärmeempfindliche Widerstände, Waschmitteladditive, wasserlösliche Filme, Zigarettenfilter.

Überraschenderweise lassen sich wässrige Lösungen der genannten Polymere schon mit sehr geringen Konzentrationen an Wasserstoffperoxid im ppm-Bereich physikalisch stabilisieren. Selbst wenn bei längerer Lagerung oder durch Temperaturbelastung ein Teil des ursprünglich eingesetzten Wasserstoffperoxids zersetzt wird, bleiben die Polymerlösungen stabil. Bei Weiterverarbeitung bleibt die stabilisierende Wirkung erhalten. Unerwartet war auch, dass trotz der geringen Konzentrationen an Wasserstoffperoxid gleichzeitig auch eine ausreichende biocide Schutzwirkung zu beobachten war.

Besonders vorteilhaft ist auch die farbliche Stabilisierung bei Temperaturbelastung.

Überraschenderweise trat selbst bei den gefundenen höheren H₂O₂-Konzentrationen und höheren Temperaturen keine sichtbare Gelierung auf.

### Beispiele

Verwendete Abkürzungen:
VP: N-Vinylpyrrolidon
VCap: N-Vinylcaprolactam
VAc: Vinylacetat
VI*MeCl: 1-Vinyl-3-methylimidazoliumchlorid

Die Viskositäten wurden mit einem Brookfield Viscosimeter bei 23°C bestimmt.

### Beispiel 1

Stabilisierung einer wässrigen Lösung eines Polyvinylpyrrolidons mit einem K-Wert von 30 (einer 1 gew.-%igen wässrigen Lösung))und einem Feststoffgehalt von 30 Gew.-%

Die Polymerlösung wurde auf verschiedene Wasserstoffperoxid-Gehalte eingestellt. Die Ausgangslösungen wurden bei 7°C gelagert. Weitere Proben wurden für zwei Tage bei 40°C gelagert und anschliessend 4 Wochen bei 7°C gelagert.

**Tabelle 1: Lagerung bei 7°C**

| Gehalt H₂O₂ [ppm] | Viskosität (Spindel 4/60 Upm) [mPas] | Jodfarbzahl |
|---|---|---|
| unbehandelt | 110-120 | 1,1 |
| 200 | 120 | 0,7 |
| 400 | 120 | 0,6 |
| 800 | 120 | 0,5 |
| 1500 | 120 | 0,4 |

**Tabelle 2: Lagerung bei 40 °C**

| Gehalt H₂O₂ [ppm] | Viskosität [mPas] | Jodfarbzahl |
|---|---|---|
| unbehandelt | 110-120 | 1,1 |
| 200 | 120 | 0,7 |
| 400 | 120 | 0,6 |
| 800 | 120 | 0,5 |
| 1500 | 120 | 0,4 |

Nach Lagerung von 4 Wochen wurden die Proben gemäß der Europäischen Pharmakopoe auf Keimbelastung untersucht. Es wurde keine Keimbelastung festgestellt.

### Beispiel 2

Behandlung einer wässrigen Lösung eines Copolymers aus VP/VI*MeCl im Gewichtsverhältnis 7:3, K-Wert 45 (1 gew.-% in 3 gew.-%iger wässriger NaCl-Lösung)

### Ausgangsprobe:

| Probennr. | H₂O₂-Menge | Temperatur [°C] | Viskosität (Sp. 3, 12 Upm) [mPas] | Jod-Farbzahl |
|---|---|---|---|---|
| 1 | - | 20 | 3.355 | 1,8 |
| 2 | 150 ppm | 20 | 3.289 | 1,7 |
| 3 | 300 ppm | 20 | 3.259 | 1,7 |

### Lagerung: 2 Tage bei [°C]

| Probennr. | H₂O₂-Menge | Temperatur [°C] | Viskosität [mPas] | Jod-Farbzahl |
|---|---|---|---|---|
| 1 | - | 20 | 3.429 | 1,6 |
| 2 | 150 ppm | 20 | 3.349 | 1,4 |
| 3 | 300 ppm | 20 | 3.379 | 1,4 |
| | | | | |

| Probennr. | H₂O₂-Menge | Temperatur [°C] | Viskosität [mPas] | Jod-Farbzahl |
|---|---|---|---|---|
| 1 | - | 40 | 3.270 | 1,8 |
| 2 | 150 ppm | 40 | 3.260 | 1,4 |
| 3 | 300 ppm | 40 | 3.250 | 1,5 |

### Beispiel 3

Behandlung einer wässrigen Lösung eines Copolymers aus VP/VI im Gewichtsverhältnis 1:1, K-Wert 72 (1 gew.-ig in Wasser)

### Ausgangsprobe:

| Probennr. | H₂O₂-Menge | Temperatur [°C] | Viskosität (Sp. 3, 12 Upm) [mPas] | Jod-Farbzahl |
|---|---|---|---|---|
| 1 | - | 20 | 20.000 | 0,8 |
| 2 | 2000 ppm | 20 | 20.700 | 0,6 |

### Lagerung: 2 Tage bei [°C]

| Probennr. | Temperatur [°C] | Viskosität [mPas] | Jod-Farbzahl |
|---|---|---|---|
| 1 | 20 | 20.800 | 0,8 |
| 2 | 20 | 21.700 | 0,5 |

### Beispiel 4

Behandlung einer wässrigen Lösung eines Copolymers aus VP und VCap im Gewichtsverhältnis 1:1, K-Wert 65 (1 gew.-%ig in Wasser)

### Ausgangsprobe:

| Probennr. | H₂O₂-Menge | Temperatur [°C] | Viskosität (Sp. 3, 10 Upm) [mPas] | Jod-Farbzahl |
|---|---|---|---|---|
| 1 | - | 20 | 30.300 | 0,8 |
| 2 | 2000 ppm | 20 | 28.500 | 0,8 |

### Lagerung: 2 Tage bei [°C]

| Probennr. | Temperatur [°C] | Viskosität [mPas] | Jod-Farbzahl |
|---|---|---|---|
| 1 | 20 | 31.543 | 0,9 |
| 2 | 20 | 32.639 | 0,7 |
| | | | |

| Probennr. | Temperatur [°C] | Viskosität [mPas] | Jod-Farbzahl |
|---|---|---|---|
| 1 | 40 | 31.990 | 0,7 |
| 2 | 40 | 28.800 | 0,7 |

### Beispiel 5

Behandlung einer wässrigen Lösung eines Copolymers aus VPNAc im Gewichtsverhältnis 6:4, K-Wert 30 (1 gew.-%ige ethanolische Lösung)

### Ausgangsprobe:

| Probennr. | H₂O₂-Menge | Temperatur [°C] | Viskosität (Sp. 3, 12 Upm) [mPas] | Jod-Farbzahl |
|---|---|---|---|---|
| 1 | - | 20 | 2.920 | 0 |
| 2 | 2000 ppm | 20 | 2.600 | 0 |

### Lagerung: 2 Tage bei [°C]

| Probennr. | Temperatur [°C] | Viskosität [mPas] | Jod-Farbzahl |
|---|---|---|---|
| 1 | 20 | 3.039 | 0 |
| 2 | 20 | 2.859 | 0 |
| | | | |

| Probennr. | Temperatur [°C] | Viskosität [mPas] | Jod-Farbzahl |
|---|---|---|---|
| 1 | 40 | 2.549 | 0 |
| 2 | 40 | 2.529 | 0 |
| 1 | 80 | 2.240 | 0 |
| 2 | 80 | 1.790 | 0 |

### Beispiel 6

Ausgehend von einer wässrigen Lösung von Polyvinylpyrrolidon K30 wurden Gele mit einem Gehalt an PVP von 3 Gew.-% und einem Gehalt an Carbomer von 0.5 Gew.-% hergestellt. Die PVP-Lösungen waren mit unterschiedlich Gehalten an Wasserstoffperoxid stabilisiert. Zum Vergleich wurde ein Gel mit einer unbehandelten PVP-Lösung hergestellt. Nach Lagerung über 4 Wochen bei 25 °C wurden die Gele hinsichtlich ihrer physikalischen Eigenschaften beurteilt. Es zeigte sich, dass die Stabilisierung mit Wasserstoffperoxid keine negativen Auswirkungen auf die spätere Anwendung hatte.

### Ausgangsproben:

| Gehalt H₂O₂ | Aussehen | pH-Wert | Geruch |
|---|---|---|---|
| 1090 ppm | fast klar | 6,9 | nach Carbomer |
| 1310 ppm | fast klar | 7,05 | nach Carbomer |
| - | fast klar | 7,6 | nach Carbomer |

### Nach Lagerung:

| Aussehen | pH-Wert | Geruch | Viskosität [mPas] |
|---|---|---|---|
| fast klar | 6,9 | nach Carbomer | 32.400 |
| fast klar | 7,0 | nach Carbomer | 34.100 |
| fast klar | 7,55 | nach Carbomer | 34.050 |

## Patentansprüche

1. Wässrige Lösungen von Homo- und Copolymeren des N-Vinylpyrrolidons, die zur physikalischen Stabilisierung auf einen Gehalt an Wasserstoffperoxid von 100 bis 5000 ppm eingestellt sind.

2. Lösungen nach Anspruch 1, enthaltend als Polymer Polyvinylpyrrolidon.

3. Lösungen nach Anspruch 1, enthaltend ein Copolymer des N-Vinylpyrrolidons mit einem Anteil an N-Vinylpyrrolidon von mindestens 20 Gew.-%.

4. Lösungen nach Anspruch 1, enthaltend als Polymer ein Copolymer aus N-Vinylpyrrolidon und mindestens eines Comonomers ausgewählt aus der Gruppe bestehend aus Methacrylamid, Vinylcaprolactam, Vinylimidazol, 1-Vinyl-3-methylimidazoliumsalzen und Vinylacetat.

5. Lösungen nach Anspruch 1, enthaltend ein Copolymer aus N-Vinylpyrrolidon und Vinylacetat mit einem Gewichtsverhältnis von 20:80 bis 80:20.

6. Lösungen nach Anspruch 1, enthaltend ein Copolymer aus N-Vinylpyrrolidon und N-Vinylimidazol mit einem Gewichtsverhältnis von 20:80 bis 80:20.

7. Lösungen nach Anspruch 1, enthaltend ein Copolymer aus N-Vinylpyrrolidon und 1-Vinyl-3-methyl-imidazoliumsalzen mit einem Gewichtsverhältnis von 5:95 bis 95:5.

8. Verwendung von Wasserstoffperoxid in Mengen von 100 bis 5000 ppm zur physikalischen Stabilisierung von wässrigen Lösungen von Homo- und Copolymeren des N-Vinylpyrrolidons.

9. Verfahren zur Herstellung von physikalisch stabilisierten wässrigen Lösungen von Homo- und Copolymeren des N-Vinylpyrrolidons, **dadurch gekennzeichnet, dass** die wässrigen Polymerlösungen mit wässrigem Wasserstoffperoxid auf einen Gehalt von 100 bis 5000 ppm Wasserstoffperoxid eingestellt werden.

10. Verfahren nach Anspruch 5, **dadurch gekennzeichnet, dass** die Zugabe des wässrigen Wasserstoffperoxids bei Temperaturen von 10 bis 95°C erfolgt.

## Claims

1. An aqueous solution of homopolymers and copolymers of N-vinylpyrrolidone which, for physical stabilization, is adjusted to a content of hydrogen peroxide of from 100 to 5000 ppm.

2. The solution according to claim 1, comprising polyvinyl pyrrolidone as polymer.

3. The solution according to claim 1, comprising a copolymer of N-vinylpyrrolidone with a fraction of N-vinylpyrrolidone of at least 20% by weight.

4. The solution according to claim 1, comprising, as polymer, a copolymer of N-vinylpyrrolidone and at least one comonomer chosen from the group consisting of methacrylamide, vinylcaprolactam, vinylimidazole, 1-vinyl-3-methylimidazolium salts and vinyl acetate.

5. The solution according to claim 1, comprising a copolymer of N-vinylpyrrolidone and vinyl acetate with a weight ratio of from 20:80 to 80:20.

6. The solution according to claim 1, comprising a copolymer of N-vinylpyrrolidone and N-vinylimidazole with a weight ratio of from 20:80 to 80:20.

7. The solution according to claim 1, comprising a copolymer of N-vinylpyrrolidone and 1-vinyl-3-methylimidazolium salts with a weight ratio of from 5:95 to 95:5.

8. The use of hydrogen peroxide in amounts of from 100 to 5000 ppm for the physical stabilization of aqueous solutions of homopolymers and copolymers of N-vinylpyrralidone.

9. A method of producing physically stabilized aqueous solutions of homopolymers and copolymers of N-vinylpyrrolidone, wherein the aqueous polymer solutions are adjusted with aqueous hydrogen peroxide to a content of from 100 to 5000 ppm of hydrogen peroxide. adjusted with aqueous hydrogen peroxide to a content of from 100 to 5000 ppm of hydrogen peroxide.

10. The method according to claim 5, wherein the addition of the aqueous hydrogen peroxide takes place at temperatures of from 10 to 95°C.

## Revendications

1. Solutions aqueuses d'homopolymères et de copolymères de la N-vinylpyrrolidone, qui sont ajustées en vue d'une stabilisation physique à une teneur en peroxyde d'hydrogène de 100 à 5000 ppm.

2. Solutions selon la revendication 1, contenant de la polyvinylpyrrolidone en tant que polymère.

3. Solutions selon la revendication 1, contenant un copolymère de la N-vinylpyrrolidone ayant une part en N-vinylpyrrolidone d'au moins 20 % en poids.

4. Solutions selon la revendication 1, contenant en tant que polymère un copolymère de N-vinylpyrrolidone et au moins un comonomère sélectionné parmi le groupe constitué du méthacrylamide, du vinylcaprolactame, du vinylimidazole, des sels de 1-vinyl-3-méthylimidazolium et de l'acétate de vinyle.

5. Solutions selon la revendication 1, contenant un copolymère de la N-vinylpyrrolidone et de l'acétate de vinyle en un rapport de poids de 20:80 à 80:20.

6. Solutions selon la revendication 1, contenant un copolymère de la N-vinylpyrrolidone et de N-vinylimidazole en un rapport de poids de 20:80 à 80:20.

7. Solutions selon la revendication 1, contenant un copolymère de N-vinylpyrrolidone et des sels de 1-vinyl-3-méthylimidazolium en un rapport de poids de 5:95 à 95:5.

8. Utilisation de peroxyde d'hydrogène en des quantités de 100 à 5000 ppm en vue de la stabilisation physique de solutions aqueuses d'homopolymères et de copolymères de la N-vinylpyrrolidone.

9. Procédé de préparation de solutions aqueuses physiquement stabilisées d'homopolymères et de copolymères de la N-vinylpyrrolidone, **caractérisé en ce que** les solutions polymères aqueuses sont ajustées à une teneur de 100 à 5000 ppm de peroxyde d'hydrogène avec du peroxyde d'hydrogène aqueux.

10. Procédé selon la revendication 5, **caractérisé en ce que** l'ajout du peroxyde d'hydrogène aqueux a lieu à des températures de 10 à 95°C.
